(19) **Europäisches Patentamt**

**European Patent Office**

**Office européen des brevets**

(11) Veröffentlichungsnummer: **0 304 567 B1**

(12) **EUROPÄISCHE PATENTSCHRIFT**

(45) Veröffentlichungstag der Patentschrift:
31.10.90

(21) Anmeldenummer: **88109367.8**

(22) Anmeldetag: **13.06.88**

(51) Int. Cl.⁵: **B65D 47/34,** B05B 11/04,
G01F 11/08

(54) **Dosierpumpe für flüssige und/oder viskose Stoffe.**

(30) Priorität: **07.07.87 DE 3722413**

(43) Veröffentlichungstag der Anmeldung:
**01.03.89 Patentblatt 89/9**

(45) Bekanntmachung des Hinweises auf die Patenterteilung:
**31.10.90 Patentblatt 90/44**

(84) Benannte Vertragsstaaten:
**AT BE CH DE FR GB IT LI NL SE**

(56) Entgegenhaltungen:
**DE-A- 2 842 073**
**DE-A- 3 236 552**
**DE-A- 3 509 178**

(73) Patentinhaber: **Andris, Raimund, Tannhörnle 9,
D-7730 Villingen-Schwenningen 22(DE)**

(72) Erfinder: **Andris, Raimund, Tannhörnle 9,
D-7730 Villingen-Schwenningen 22(DE)**

(74) Vertreter: **Neymeyer, Franz, Dipl.-Ing. (FH), Haselweg 20,
D-7730 Villingen 24(DE)**

**Beschreibung**

Die Erfindung betrifft eine Dosierpumpe zur Abgabe dosierter Mengen flüssiger unundd/oder niederviskoser, insbesondere pastöser Medien aus Flaschen, Dosen od. dgl. mit einem zwischen zwei axial teleskopartig gegeneinander beweglichen Gehäuseteilen aus formstabilem Kunststoff dichtend angeordneten Faltenbalg aus elastischem Kunststoff, bei der an beiden Enden des Faltenbalgs Pumpenventile angeordnet sind, die jeweils ein relativ zu einer Ventilsitzringfläche axial bewegliches Schließorgan aufweisen, wobei die ansaugseitige Ventilsitzringfläche am Faltenbalg angeformt ist und wobei der erste GeGehäuseteil mit einem Ausgabemundstück versehen und der zweite Gehäuseteil auf den Hals einer Flasche, Dose od. dgl. aufsetzbar oder mit einem angeformten Behälter versehen ist.

Bei einer bekannten, handbetätigten Faltenbalgsprühpumpe (DE-OS 28 42 073) für flüssige Medien ist der ausgabeseitige Endabschnitt, der die letzte Falte bildet, zwischen zwei formschlüssig ineinandergreifenden Gehäuseteilen ortsfest eingeklemmt. Der ansaugseitige Endabschnitt des Faltenbalgs, der mit einer schlauchförmigen Ansaugverlängerung und mit einer konischen Ventilsitzringfläche für eine Kungel als Schließorgan versehen ist, sitzt formschlüssig fest in einem axial beweglichen Spann- und Druckorgan, das unter dem Einfluß einer in Ausgaberichtung wirksamen Druckfeder steht. Zum Ansaugen von Flüssigkeit aus einem Behälter muß der Faltenbalg unter gleichzeitigem Spannen der Druckfeder axial gestreckt werden.

Danach übt die Druckfeder einen ständigen Ausgabedruck auf den Faltenbalg aus. Als Ausgabevorrichtung ist am Ende eines in einer Stirnwand eines Gehäuseteils axial beweglichen, federbelasteten Rohrnippels eine Sprühdüse angeordnet. Der Rohrnippel besitzt einen Flanschring und außerhalb davon eine durch eine Ringdichtung verschließbare Querbohrung, die beim Hineindrücken des Rohrnippels in die Stirnwand frei wird.

Abgesehen davon, daß mit dieser Vorrichtung nur ein flüssiges Medium keine dosierte Mengen ausgegeben werden können, ist der Aufbau und die Wirkungsweise für eine Großserienfertigung viel zu aufwendig und umständlich. Für die Ausgabe pastöser Medien ist diese Vorrichtung nicht geeignet, weil das Ausgabeseitige Pumpenventil einen nur sehr geringer Durchlaßquerschnitt aufweist.

Bei einer anderen bekannten Dosierpumpe mit Pumpenbalg (=Faltenbalg) der vorstehend genannten Art (DE-OS 35 09 178) sind die beiden gegeneinander axial verschiebbaren Gehäuseteile jeweils mit einer rechtwinklig zur Achse des Faltenbalgs verlaufenden Querwand versehen. Diese Querwände weisen auf den einander zugekehrten Seiten jeweils Ringrippen zur dichtenden Aufnahme je eines Faltenbalgs auf. Außerdem sind in diesen beiden Querwänden Bohrungen mit Ventilsitzringflächen und die dazugehörigen Schließorgane der Pumpenventile angeordnet. Während die Querwand des mit dem Ausgabemundstück versehenen Gehäuseteils mit einem in den Faltenbalg hineinragenden Rohrstutzen zur Führung des Schließorgans des ausgabeseitigen Pumpenventils versehen ist, besitzt die Querwand des zweiten Gehäuseteils eine auf der dem Faltenbalg gegenüberliegenden Seite angeordneten Rohrstutzen zur Führung des Schließorgans des ansaugseitigen Pumpenventils. Zuglelich ist dieser Rohrstutzen mit einem im Durchmesser verjüngten Ansatz zur Befestigung eines Ansaugschlauches versehen. Beide Gehäuseteile sind mit zylindrischen Führungswänden versehen, die teleskopartig ineinander ragen, wobei der zweite Gehäuseteil in dem außerhalb der Querwand liegenden Bereich mit einem Innengewinde versehen ist, durch welches er z.B. auf das Außengewinde eines Flaschen- oder Dosenhalses aufgeschraubt werden kann.

Während das Schließorgan des ansaugseitigen Pumpenventils lose mittels sternförmig angeordneter Ringrippen im Rohransatz der Querwand des zweiten Gehäuseteils geführt und durch krallenartige, in das Innere des Faltenbalgs hineinragende Finger gegen herausfallen gesichert ist, weist das Schließorgan des ausgabeseitigen Pumpenventils angespritzte Federorgane auf, welche es mit geringem axialen Druck auf die Ventilsitzringfläche drücken und in Schließlage halten. Diese Federelemente stützen sich an einer Stirnwand des mit dem Ausgabemundstück versehenen Gehäuseteils ab. Um dieses Schließorgan in seine Arbeitsposition zu bringen ist es erforderlich, daß dieser erste Gehäuseteil mit einer abnehmbaren oder nachträglich anbringbaren Stirnwand versehen ist, zu deren Anbringung in jedem Fall ein besonderer Arbeitsgang erforderlich ist.

Der Erfindung liegt die Aufgabe zugrunde, eine Dosierpumpe der eingangs genannten Art konstruktiv so zu gestalten, daß sie mit einem Minimum an Einzelteilen und dadurch mit geringeren Herstellungskosten, insbesondere Montagekosten, herstellbar ist. Dabei ist zu berücksichtigen, daß derartige Dosierpumpen in sehr hohen Stückzahlen (millionenfach) als Massenartikel hergestellt werden, so daß schon geringfügige Verringerungen der Herstellungskosten eine hohe wirtschaftliche Bedeutung haben.

Außerdem soll durch die Erfindung eine Verbesserung der Funktionssicherheit, insbesondere der Lecksicherheit sowohl der Pumpenventile als auch der Verbindungen zwischen dem Faltenbalg und den beiden Gehäuseteilen erzielt werden.

Gelöst wird diese Aufgabe erfindungsgemäß dadurch, daß der Faltenbalg an seinem ausgabeseitigen Ende eine einstückig angeformte, mit einer Durchlaßöffnung und einer Ventilsitzringfläche für das federbelastete Schließorgan versehene Stirnwand aufweist und mittels einer Ringwandfläche an einen Rohransatz dichtend anliegt, der einstückig an dem mit dem Ausgabemundstück versehenen Gehäuseteil amgeformt ist und sich stirnseitig an einer Ringschulter des Faltenbalgs abstützt.

Der Hauptvorteil, der dadurch erzielt wird, besteht darin, daß der mit dem Ausgabemundstück versehene Gehäuseteil einstückig hergestellt und als Fertigteil nach dem Aufsetzen des Schließorgans des ausgabeseitigen Pumpenventils auf die Ventilsitzringfläche des Faltenbalgs unter gleichzeitiger Herstellung seiner Verbindung mit dem Faltenbalg auf den zweiten Gehäuseteil montiert werden kann. Außerdem ergeben sich zwischen einem relativ harten Schließorgan und einem weichen Ventilsitz bessere Dichtungsqualitäten als bei gleich harten Materialien.

Durch die Ausgestaltung der Dosierpumpe nach Anspruch 2 sind günstige Bedingungen für eine gute Führung des Schließorgans und für eine stabile Verbindung zwischen dem ersten Gehäuseteil und dem Faltenbalg geschaffen.

Durch die Ausgestaltung der Erfindung nach Anspruch 3 wird auch eine mit geringen Schließkräften vollständig luftdichte Schließlage zwischen dem Schließorgan und dem Ventilsitzring gewährleistet.

Um auf einfache Weise eine auch bei hoher Druckbelastung dichte Verbindung zwischen dem mit dem Ausgabemundstück versehenen Gehäuseteil einerseits und dem Faltenbalg andererseits zustande zu bringen, sind die Ausgestaltungen der Erfindung gemäß Anspruch 4 und 5 vorgesehen, wobei es vorteilhaft ist, wenn das Schließorgan des ausgabeseitigen Pumpenventils mit sich an der Deckelwand des Gehäuseteils abstützenden Federelementen versehen ist, welche es in Schließlage halten.

Mit der Ausgestaltung nach Anspruch 6 wird zusätzlich zu einer dichten und stabilen Verbindung zwischen dem Faltenbalg und dem einen Gehäuseteil auch der fertigungstechnisch bedeutungsvolle Vorteil erzielt, daß die dünne und deshalb gegen äußere mechanische Einflüße empfindliche Ringlippe am Ventilsitzkragen z.B. beim Herausfallen aus der Spritzgußmaschine oder beim losen Transport in Kisten gegen Beschädigung geschützt ist.

Durch die Ausgestaltung der Erfindung nach Anspruch 7 ist es möglich das ansaugseitige Pumpenventil innerhalb des Faltenbalgs anzuordnen und so den Arbeitsdruck von der zwischen dem Manschettenansatz des Faltenbalgs und der Ringwand des zweiten Gehäuseteiles bestehenden Verbindung fernzuhalten. Somit wird auch eine höhere Betriebssicherheit und insbesondere eine bessere Lecksicherheit erreicht.

Die Ausgestaltung der Erfindung nach Anspruch 8 gewährleistet, daß der Arbeitshub des Faltenbalgs durch das Schließorgan des ansaugseitigen Pumpenventils nicht verringert wird, daß das Schließorgan innerhalb seiner Ventilsitzringfläche eine leichtgängige Führung aufweist und daß an der Oberseite des Schließorganes mit anderen Teilen keine großflächige Berührung die zu einer Klebehaftung führen könnte, entstehen kann.

Durch die vorteilhaften Ausgestaltungen nach den Ansprüchen 7 und 8 ist in Verbindung mit dem Verfahren nach den Ansprüchen 11, 12 oder 13 möglich, das Schließorgan des ansaugseitigen Pumpenventils in einem Arbeitsgang mit dem zweiten Gehäuseteil zu spritzen und es durch einen einzigen zusätzlichen Arbeitsgang in seine funtionsgerechte Arbeitsposition zu bringen. Auch hierdurch kann eine zusätzliche Kostenersparnis erzielt werden, die bei der für solche Dosierpumpen vorgsehenen Massenfertigung wirtschaftlich von großer Bedeutung ist.

Anhand der Zeichnung wird nun die Erfindung im einzelnen näher erläutert. Es zeigt:

Fig. 1 eine erste Ausführungsform einer Dosierpumpe im Schnitt;

Fig. 2 eine weitere Dosierpumpe, bei der das ansaugseitige Ventil anders ausdgebildet ist als bei der Dosierpumpe der Fig. 1;

Fig. 3 eine Dosierpumpe für einen Pastenspender, bei dem an dem zweiten Gehäuseteil ein Pastenbehälter einstückig angeformt ist;

Fig. 4 die Dosierpumpe eines Pastenspenders bei dem das ausgabeseitige Ende des Pumpenventils anders ausgebildet ist als bei dem Pastenspender der Fig. 1, 2 und 3;

Fig. 5 den ausgabeseitigen Endabschnitt des Faltenbalgs der Fig. 4 vergrößert im Schnitt.

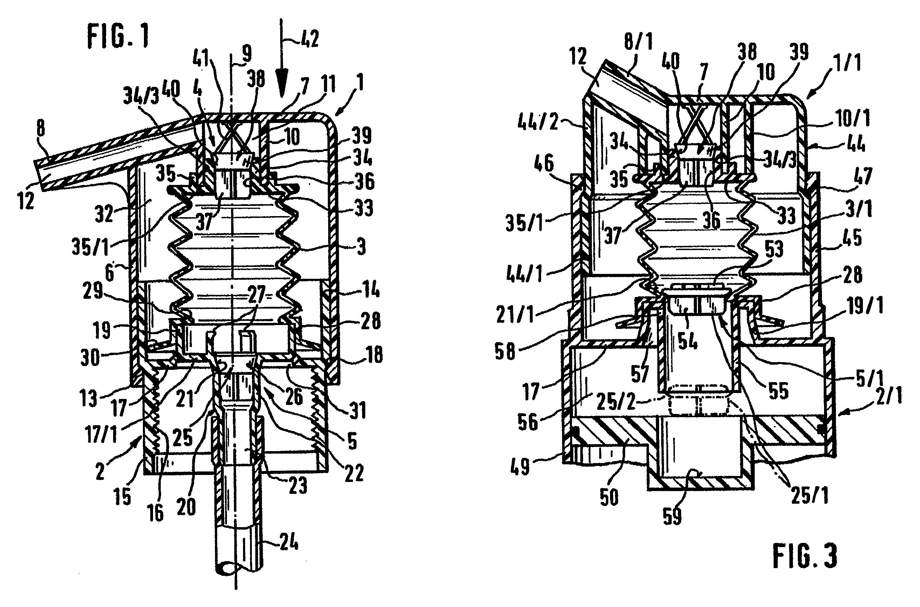

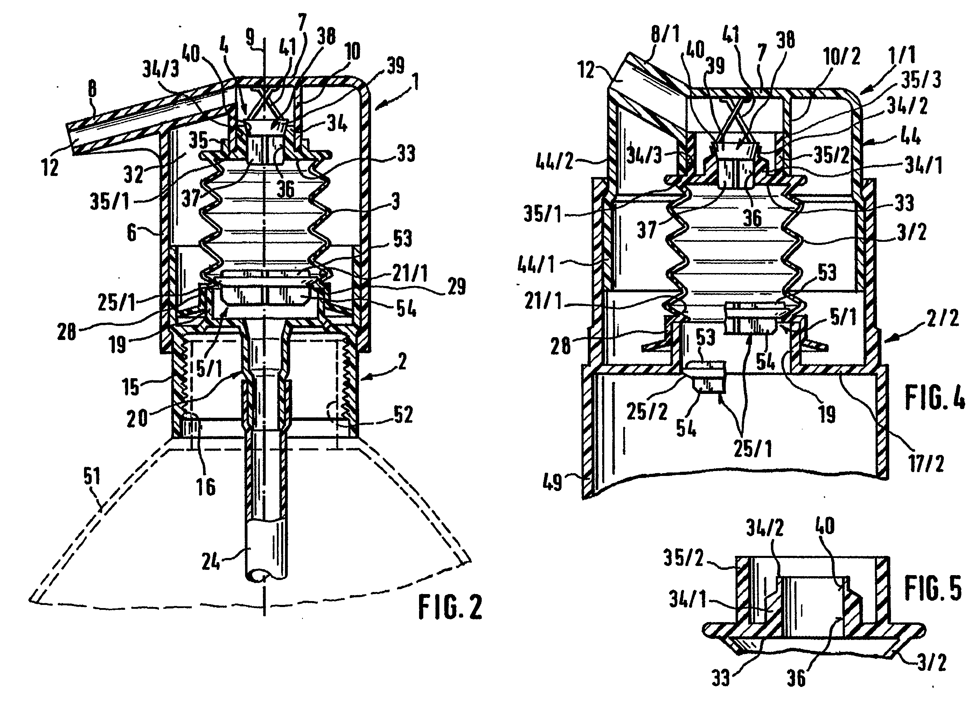

In der Zeichnung sind zwei unterschiedliche Typen von Dosierpumpen dargestellt. Die Fig. 1 und 2 zeigen jeweils Dosierpumpen, die insbesondere zur dosierten Ausgabe von flüssigen oder nahezu flüssigen Medien dienen und so gestaltet sind, daß sie auf Flaschen oder Dosen aufgeschraubt werden können. Die in den Fig. 3 und 4 dargestellten Dosierpumpen hingegen sind Bestandteil von sog. Pastenspendern, wobei jedoch die grundsätzliche Funktionsweise bei beiden Typen die gleiche ist.

Die in Fig. 1 dargestellte Dosierpumpe besteht im wesentlichen aus zwei zylindrischen Gehäuseteilen 1 und 2, einem Faltenbalg 3 und zwei an den Enden des Faltenbalgs 3 angeordneten Pumpenventilen 4 und 5. Während die beiden Gehäuseteile 1 und 2 aus hartem, formstabilem Kunststoff bestehen, besteht der Faltenbalg 3 aus einem weichen, formelastischen Kunststoff, der zugleich die für den Pumpvorgang notwendigen Rückstellkräfte aufzubringen in der Lage ist.

Der Gehäuseteil 1 ist als einstückiges Spritzgußteil hergestellt, und er weist einen zylindrischen Rohrkörper 6, eine Stirnwand 7, ein Ausgabemundstück 8 und einen konzentrisch zur Rohrkörperachse 9 an der Innenseite der Stirnwand 7 angeordneten Rohransatz 10 auf, dessen Innenraum 11 mit dem Ausgabekanal 12 des Ausgabmundstückes 8 in Verbindung steht. An seinem der Stirnwand 7 gegenüberliegenden Endabschnitt ist der Rohrkörper 6 mit einer nach innen vorspringenden Ringrippe 13 versehen.

Der Gehäuseteil 2 ist ebenfalls als einstückiges Spritzgußteil aus hartem, formelastischem Kunststoff hergestellt und besteht aus einem teleskopartig im rohrkörper 6 des Gehäuseteiles 1 axial verschiebbar geführten Führungsrohrstück 14 und aus einem mit einem um die radiale Dicke der Ringrippe 13 verringerten Aussendurchmesser versehenen Gewinderohrstück 15 mit einem Innengewinde 16, sowie aus einer Querwand 17, die an der Stelle angeordnet ist, wo das Führungsstück 14 und das Gewinderohrstück 15 ineinander übergehen. Durch die unterschiedlichen Außendurchmesser der beiden Rohrstücke 14 und 15 ist eine Ringschulter 18 gebildet, welche als Anschlag für die Ringrippe 13 einer gegen die Stirnwand 7 gerichteten Ringwand 19 und mit einem axial gegenüber der Querwand 17 um etwa deren Dicke nach außen versetzten Querwandabschnitt 17/1 versehen, an dem auf der gegenüberliegenden Seite ein im Durchmesser abgestufter Rohrstutzen 20 angeformt ist, dessen oberer Abschnitt innen eine konische Ventilsitzringfläche 21 und einen zylindrischen Führungsabschnitt 22 aufweist, an den sich ein Kupplungsstück 23 zur Aufnahme eines Ansaugschlauches 24 anschließt. Im Führungsabschnitt 22 des Rohrstutzens 20 ist ein Schließorgan 25 mit einem konischen Kopfteil 26 axial beweglich untergebracht und durch am Querwandabschnitt 17/1 angespritzte, krallenartige Führungselemente gegen Herausfallen gesichert. Der Kopfteil 26 des Schließorganes 25 und die Ventilsitzringfläche 21 bilden zusammen das ansaugseitige Pumpenventil 5. In dem Führungsabschnitt 22 des Rohrstutzens 20 ist der untere, aus einer Kreuzrippe bestehende Führungsteil 37 des Schließorganes 25 geführt.

Der Faltenbalg 3 ist an seinem unteren Ende mit einem die Ringwand 19 dichtend umschließenden Manschettenansatz 28 und mit einem flanschartigen Ringteil 29 versehen, der auf der Stirnseite der Ringwand 19 aufsitzt. An das untere Ende des Manschettenansatzes 28 schließt sich eine schräg nach außen verlaufende Ringlippe 30 an, die sich dichtend an die Innenfläche des Rohrstückes 14 anlegt, wenn z.B. bei liegender oder auf dem Kopf stehender Flasche durch eine Belüftungsöffnung 31 in der Querwand 17 des Gehäuseteiles 2 Flüssigkeit austritt und gegen die Ringlippe 30 drückt, die aber bei dem entgegen der Richtung des Pfeiles 42 erfolgenden Saughub des oberen Gehäuseteiles 1 Luft zur Belüftungsöffnung 31 einströmen läßt. Damit auch Luft in den Innenraum 32 des oboberen Gehäuseteils 1 von außen einströmen kann, ist es zweckmäßig, auch den Gehäuseteil 1 an geeigneter Stelle mit einer Belüftungsöffnung zu versehen. Es kann aber auch ausreichen, das axiale Spiel zwischen den beiden Gehäuseteilen 1 und 2 so groß zu wählen, daß durch den zwischen diesen beiden Teilen bestehenden Ringspalt genügend Luft in den Innenraum ein- bzw. aus diesem herausströmen kann.

An seinem oberen Ende ist der Faltenbalg 3 mit einer Stirnwand 33 versehen, die einen in den Rohransatz 10 der Stirnwand 7 des Gehäuses 1 hineinragenden Ventilsitzkragen 34 und eine den unteren Abschnitt des Rohransatzes 10 dichtend umschließende Ringrippe 35 aufweist. Dabei bildet die äußere Mantelfläche des Ventilsitzkragens 34 eine dichtend an der Innenfläche des Rohransatzes 10 anliegende Fläche 34/3. Der Ventilsitzkragen 34 bildet mit der Ringrippe eine Ringnut, dessen Bodenfläche eine Ringschulter 35/1 darstellt, auf der sich der Rohransatz 10 stirnseitig abstützt. In der Bohrung 36 des Ventilsitzkragens 34 ist der untere, aus einer Kreuzrippe bestehende Führungsteil 37 eines aus hartem Kunststoff bestehenden Schließorgans 38 geführt, dessen konischer Schließkopf 39 dichtend auf einer ebenfalls konischen Ventilsitzringfläche 40 des aus dem gleichem weichem, elastischem Kunststoff wie der Faltenbalg 3 bestehenden Ventilsitzkragens 34 aufsitzt und mit zwei sich an der Innenseite der Stirnwand 7 des Gehäuseteiles 1 abstützenden Federelementen 41 versehen ist. Die Federelemente 41 halten das Schließorgan 38 normalerweise mit schwachem Schließdruck in der in Fig. 1 dargestellten Schließlage, gestatten jedoch eine axiale Bewegung des Schließorganes 38 gegen die Stirnwand 7, wenn der Gehäuseteil 1, manuell in Richtung des Pfeiles 42 betätigt, seinen Arbeits- und Ausgabehub ausführt. Während des Ausgabehubes ist das untere Pumpenventil 5 geschlossen, so daß das sich im Innenraum des Faltenbalges 3 befindliche Medium nur durch das ausgabeseitige Pumpenventil 4 zum Ausgabemundstück 8 bzw. durch den Ausgabekanal 12 nach außen entweichen kann. Beim entgegengesetzten Rückstell- und Ansaughub, wenn sich also der Gehäuseteil 1, angetrieben durch die Federkraft des Faltenbalges 3, wieder entgegen der Richtung des Pfeiles 42 relativ zum feststehenden Gehäuseteil 2 nach oben bewegt, bleibt das Pumpenventil 4 geschlossen, und es wird durch das sich dabei automatisch öffnende Pumpenventil 5 durch den Rohrstutzen 20 bzw. den Ansaugschlauch 24 eine entsprechende Menge vom Flascheninhalt in den Faltenbalg 3 angesaugt. Durch den in den Rohransatz 10 des Gehäuseteils 1 dichtend hineinragenden Ventilsitzkragen 34, der aus dem gleichen weichen Material besteht wie der Faltenbalg 3, da er einstückig an diesem angeformt ist, kann ein im Innern des Faltenbalgs 3 entstehender oder bestehende Druck sich nur verbessernd auf die Lecksicherheit bzw. auf die Dichte der Verbindung zwischen dem Rohransatz 10 und dem Ventilsitzkragen 34 auswirken. Dadurch, daß der Ventilsitzkragen 34 mit seiner Ventilsitzringfläche 40 aus weicherem Material besteht als der Schließkörper 38, wird zudem eine bessere Schließeigenschaft dieses Pumpenventils 4 erzielt als beim ansaugseitigen Pumpenventil 5, bei dem der Schließkörper 25 aus zumindest annähernd gleich hartem Material besteht wie der Rohrstutzen 20, an dem die Ventilsitzringfläche 21 ausgebildet ist.

Durch die Anordnung der Ventilsitzringfläche 40 des ausgabeseitigen Pumpenventils 4 in dem einstückig am Faltenbalg 3 angeformten Ventilsitzkragen 34 ist auch der Vorteil erzielt, daß die Stirnwand 7 einstückig am Gehäuseteil angeordnet sein kann. Es ist nämlich möglich, das Schließorgan 38 in den Ventilsitzkragen 34 einzusetzen, bevor dieser in den Rohrstutzen 10 des Gehäuseteils 1 geschoben wird.

Die in Fig. 2 dargestellte Dosierpumpe unterscheidet sich von derjenigen der Fig. 1 nur dadurch, daß das ansaugseitige Pumpenventil 5/1 statt eines stöpselförmigen, im Rohrstutzen 20 geführten Schließorgans ein tellerartiges Schließorgan 25/1 aufweist, das innerhalb des Faltenbalges 3 auf einer konischen Ventilsitzringfläche 21/1 aufsitzt, die von dem sich an den Ringteil 29 anschließenden ersten Faltenabschnitt des Faltenbalges 3 gebildet wird. Mit Ausnahme der Führungselemente 27, die bei der Ausführungsform der Fig. 2 nicht vorhanden sind, sind alle übrigen Teile exakt gleich ausgebildet wie bei der Ausführungsform der Fig. 1. In gestrichelten Linien ist in Fig. 2 auch der obere Teil einer Flasche 51 angedeutet, auf deren Flaschenhals ner Flasche 51 angedeutet, auf deren Flaschenhals 52 der Gehäuseteil 2 der Dosierpumpe aufgeschraubt ist.

Das tellerartige Schließorgan 25/1 ist auf seiner Ober- und Unterseite jeweils mit kreuzweise angeordneten Rippen 53 bzw. 54 versehen. Während die unteren Rippen 54 zur Zentrierung des Schließorgans 25/1 im Ringteil 29 dienen, verhindern die Rippen 53 ein flächenhaftes Anliegen und somit ein Festkleben an der Innenseite der Stirnwand 33 des Faltenbalges 3.

Die Form und die Anordnung des Schließorgans 25/1 hat funktionell den Vorteil, daß der sich beim Ausstoßhub im Innern des Faltenbalges 3 aufbauende Druck sich nicht auf den Manschettenansatz 28 auswirken kann, so daß die Entstehung eines Lecks an dieser Stelle mit großer Sicherheit verhindert wird und zwar auch dann, wenn dieser Ausstoßdruck z.B. infolge eines verstopften Ausgabekanals 12 sehr hoch wird.

In Fig. 3 ist die Dosierpumpe eines Pastenspenders dargestellt, bei dem der die Pumphübe ausführende Gehäuseteil 1/1 mit einem zylindrischen Rohrkörper 44 teleskopartig axial beweglich in einem zylindrischen Führungsrohr 45 eines zweiten Gehäuseteils 2/1 geführt ist. Während der untere, in das Führungsrohr 45 hineinragende Abschnitt 44/1 einen etwas größeren Durchmesser aufweist als der obere, aus dem Führungsrohr 45 herausragende Abschnitt 44/2, ist am oberen Endabschnitt des Führungsrohres 45 eine nach innen vorspringende Ringrippe 46 vorgesehen, die für die zwischen den beiden Abschnitten 44/1 und 44/2 gebildete Ringschulter 47 des Rohrkörpers 44 einen axialen Anschlag bildet. Im übrigen unterscheidet sich der Gehäuseteil 1/1 des Pastenspenders der Fig. 3 vom Gehäuseteil 1 der Dosierpumpe der Fig. 1 auch dadurch, daß er ein schräg nach oben gerichtetes Ausgabemundstück 8/1 mit einem Ausgabekanal 12 und konzentrisch zum Rohransatz 10 einen zusätzlichen Stützring 10/1 an der Innenseite seiner Stirnwand 7 aufweist, der mit einer Stirnseite auf der von der äußeren Stirnfläche gebildeten Ringschulter 35/1 des Faltenbalges 3 aufsitzt. Das Pumpenventil 4 ist genau gleich ausgebildet wie beim Ausführungsbeispiel der Fig. 1. Auch der Faltenbalg 3/1 hat an seinem ausgabeseitigen Endabschnitt exakt die gleiche Form wie der Faltenbalg 3 beim Ausführungsbeispiel der Fig. 1.

Die Funktionsweise des in Fig. 3 in Verbindung mit einem Pastenspender dargestellten ausgabeseitigen Pumpenventils 4 ist exakt die gleiche wie bei der in Fig. 1 dargestellten Dosierpumpe.

Während bei den in den Fig. 1 und 2 dargestellten Dosierpumpen die Schließorgane 25, 25/1 und 38 jeweils als separate Spritzgußteile für sich hergestellt und durch Montagearbeit in Arbeitspositionen gebracht werden müssen, sind in den Fig. 3 und 4 Ausführungsbeispiele von Dosierpumpen dargestellt, bei denen die Schließorgane 25/1 der ausgabeseitigen Pumpenventile 5/1 gemeinsam in einem Spritzgußvorgang mit dem Gehäuseteil 2/1 bzw. 2/2 gespritzt werden. Beim Ausführungsbeispiel der Fig. 3 und 4 ist das tellerförmige Schließorgan 25/1, das die gleiche oder eine ähnliche Form hat wie beim Ausführungsbeispiel der Fig. 2 und das ebenfalls auf einer Ventilsitzringfläche 21/1 des Faltenbalges 3/1 sitzt, zunächst über dünne Verbindungsabschnitte 25/2 einstückig am unteren Ende eines konzentrisch zur Ringwand 19/1 angeordneten Rohrabschnittes 55 angespritzt, wie das in Fig. 3 in gestrichelten Linien angedeutet ist. beim Ausführungsbeispiel der Fig. 4 ist das Schließorgan 25/1 zunächst über dünne Verbindungsabschnitte 25/2 einstückig am unteren Ende einer an der Querwand 17/2 angeformten Ringwand 19 angespritzt. Nach dem Aufsetzen des Faltenbalges 3/1 bzw. 3/2 auf diese Ringwand 19/1 bzw. 19 vom Rohrabschnitt 55 bzw. vom unteren Ende der Ringwand 19 werden diese Schließorgane 25/1 in axialer Richtung abgetrennt und zugleich in den Faltenbalg 3/1 bzw. 3/2 hineingeschoben, so daß sie dort jeweils auf der Ventilsitzringfläche 21/1 zu sitzen kommen. Durch die Elastizität des Faltenbalges 3/1 bzw. 3/2 ist dies ohne weiteres möglich.

Beim Ausführungsbeispiel der Fig. 3 bildet der konzentrisch zu der Ringwand 19/1 angeordnete Rohrstutzen 55, der um die Hälfte seiner Gesamtlänge in den Füllraum 56 des Pastenbehälters 49 hineinragt, mit der Ringwand 19/1 eine Ringkammer 57, die durch eine oder mehrere am oberen Ende des Rohrstutzens 55 angeordnete, düsenartige, d.h. mit geringem Durchlaßquerschnitt versehene, Durchlaßöffnungen 58 mit dem Innenraum des Rohransatzes 55 verbunden ist. Es besteht somit die Möglichkeit, diese Ringkammer 57 mit einer Paste zu füllen, die eine andere Farbe aufweist als die im Füllraum 56 befindliche Paste und somit zu erreichen, daß der aus dem Ausgabekanal 12 des Ausgabemundstückes 8/1 austretende Pastenstrang mit einem oder mehreren andersfarbigen Pastenstreifen versehen ist.

Um auch bei dieser Ausführungsform eine möglichst vollständige Leerung des Pastenbehälters 49 erzielen zu können, ist in diesem ein nachlaufkolben 50 angeordnet, der im Zentrum eine Vertiefung 59 aufweist, in welche der untere Teil des Rohrstutzens 55 eintauchen kann.

Beim Ausfürhungsbeispiel der Fig. 4 ist der ausgabeseitige Endabschnitt des Faltenbalgs 3/2 anders ausgebildet als in den Fig. 1 bis 3.

Es hat sich in der Praxis erwiesen, daß bei sehr geringen Schließkräften, die von den Federelementen 41 auf das Schließorgan 38 ausgeübt werden, ein absolut luftdichtes Schließen dann nicht gewährleistet ist, wenn auch nur einer der beiden die Schließung bewirkenden Ventilteile eine Unrundheit von beispielsweise 0,01 mm aufweist. Um diesen Nachteil zu beseitigen ist die Stirnwand 33 des Faltenbalgs 3/2 mit einem Ventilsitzkragen 34/1 versehen, der an seinem ausgabeseitigen Ende eine dünne Ringlippe 34/2 als Ventilsitzring aufweist, deren Innenfläche die Ventilsitzringfläche 40 bildet. Durch die geringe Wanddicke von etwa 0.2 bis 0,4 mm dieser Ringlippe 34/2 kann sich diese auch bei sehr geringen axialen Schließkräften der Federelemente 41 ringsum absolut luftdicht an die Konusfläche des Schließkopfes 39 anlegen, auch wenn die Ringlippe 34/2 selbst und/oder die Konusfläche unrund ist. ob dabei der Ventilsitzkragen 34/1 eine zylindrische oder konische Form hat ist nur von untergeordneter Bedeutung.

Des weiteren ist konzentrisch zum Ventilsitzkragen 34/1 in radialem Abstand um diesen herum an der Stirnwand 33 in Hülsenansatz 35/2 angeformt der eine größere axiale Länge aufweist als der Ventilsitzkragen 34/1 mit seiner Ringlippe 34/2.

Dieser Hülsenansatz 35/2 ragt so in einen entsprechend weiten Rohransatz 10/2, daß seine äußere Ringwandfläche 35/3 dichtend an der Innenfläche des Rohransatzes 10/2 anliegt. Der Rohransatz 10/2 ist innenseitig einstückig an der Stirnwand 7 des Gehäuseteils 1/1 angeformt. Durch diesen Hülsenansatz 35/2 wird zugleich der Vorteil erzielt, daß die dünne, gegen mechanische Einflüsse empfindliche Ringlippe 34/2, wenn solche Faltenbalge 3/2 als Schüttgut lose in Behältern liegen oder einzeln aus der Spritzgußmaschine in Behälter fallen, nicht beschädigt werden, indem der Hülsenansatz 35/2 die anderen Faltenbalge von der Ringlippe 34/2 fernhält. Für die Fertigung und den Umgang mit den losen Faltenbalgen ist dieser Vorteil von erheblicher Bedeutung, weil sich Beschädigungen meist erst am fertigen Gerät herausstellen.

Der Hülsenansatz 35/2 könnte auch so angeordnet sein, daß er den Rohransatz 10/2 umschließt. Auch hierbei stützt sich der Rohransatz 10/2 stirnseitig auf einer den Hülsenansatz 35/2 umgebenden Ringschulter 35/1 des Faltenbalgs 3/2 ab.

## Patentansprüche

1. Dosierpumpe zur Abgabe dosierter Mengen flüssiger und/oder niederviskoser, insbesondere pastöser Stoffe aus Flaschen, Dosen, od. dgl. mit einem zwischen zwei koaxial teleskopartig gegeneinander beweglichen Gehäuseteilen (1, 2) aus formstabilem Kunststofff dichtend angeordneten Faltenbalg (3) aus elastischem Kunststoff, bei der an beiden Enden des Faltenbalgs (3) Einwegventile (4, 5) angeordnet sind, die jeweils ein relativ zu einer Ventilsitzringfläche (21, 40) axial bewegliches Schließorgan (25, 38) aufweisen, wobei der erste Gehäuseteil (1) mit einem Ausgabemundstück (8) versehen und der zweite Gehäuseteil (2) auf den Hals einer Flasche, Dose od. dgl. aufsetzbar oder mit einem angeformten Behälter (49) versehen ist, dadurch gekennzeichnet, daß der Faltenbalg (3, 3/1, 3/2) an seinem ausgabeseitigen Ende eine einstückig angeformte mit einer Durchlaßöffnung (36) und einer Ventilsitzringfläche (40) für das federbelastete Schließorgan (38) versehene Stirnwand (33) aufweist und mittels einer Ringwandfläche (34/3, 35/3) an einem Rohransatz (10, 10/1, 10/2) dichtend anliegt, der einstückig an dem mit dem Ausgabemundstück (8, 8/1) versehenen Gehäuseteil (1, 1/1) angeformt ist und sich stirnseitig an einer Ringschulter (35/1) des Faltenbalgs (3, 3/1, 3/2) abstützt.

2. Dosierpumpe nach Anspruch 1, dadurch gekennzeichnet, daß die Stirnwand (33) des Faltenbalgs (3, 3/1, 3/2) mit einem die Durchlaßöffnung umschließenden ventilsitzkragen (34, 34/1) versen ist, dessen ausgabeseitiger Endabschnitt die Ventilsitzringfläche (40) bildet, und dessen Außenfläche dichtend an der Innenfläche des Rohransatzes (10) anliegt.

3. Dosierpumpe nach Anspruch 2, dadurch gekennzeichnet, daß die Ventilsitzringfläche (40) von einer dünnwandigen Ringlippe (34/2) des Ventilsitzkragens (34/1) gebildet ist.

Dosierpumpe nach Anspruch 1, 2 oder 3, dadurch gekennzeichnet, daß der Ventilsitzkragen (34) mit seiner Umfangsfläche dichtend an der Innenfläche des Rohransatzes (10) anliegt.

5. Dosierpumpe nach Anspruch 4, dadurch gekennzeichnet, daß die Stirnwand (33) des Faltenbalges (3) mit einer den Rohransatz (10) eng umschließenden Ringrippe (35) versehen ist.

6. Dosierpumpe nach Anspruch 1, 2 oder 3, dadurch gekennzeichnet, daß der Ventilsitzkragen (34/1) in radialem abstand von einem einstückig an der Stirnwand (33) des Faltenbalgs (3) angeformten Hülsenansatz (35/2) umgeben ist der den Ventilsitzkragen (34/1) in axialer Richtung überragt und der dichtend in den Rohransatz (10/2) des mit dem Ausgabemundstück (8/1) versehenen Gehäuseteils (1/1) hineinragt oder diesen Rohransatz (10/2) dichtend umschließt.

7. Dosierpumpe nach einem der Ansprüche 1 bis 6, dadurch gekennzeichnet, daß der Faltenbalg (3) an seinem ansaugseitigen Ende mit einem eine zylindrische Ringwand (19) des zweiten Gehäuseteils (2) dichtend umschließenden Manschettenansatz (28) und mit einer radial innerhalb der Ringwand (19) liegenden Ventilsitzringfläche (21/1) für das Schließorgan (25/1) des ansaugseitigen Pumpenventils (5/1) versehen ist.

8. Dosierpumpe nach Anspruch 7, dadurch gekennzeichnet, daß das Schließorgan (25/1) des ansaugseitigen Einwegventils (5/1) die Form einer kreisförmigen Scheibe aufweist, die auf beiden Stirnseiten mit kreuzweise oder sternförmig angeordneten Radialrippen (53, 54) versehen ist.

9. Dosierpumpe nach einem der Ansprüche 1 bis 8, dadurch gekennzeichnet, daß der zweite Gehäuseteil (2/2) innerhalb der vom ansaugseitigen Manschettenansatz (28) des Faltenbalges (3/1) dichtend umschlossenen Ringwand (19/1) eine mit wenigstens einer Durchlaßöffnung (58) versehene, hülsenartige Zwischenwand (55) aufweist, welche mit der Ringwand (19/1) eine zum angeformten Behälter (49) hin offene Teilkammer (57) bildet.

10. Dosierpumpe nach Anspurch 9, dadurch gekennzeichnet, daß die Zwischenwand die Form eines zur Ringwand (19/1) konzentrischen, zylindrischen Rohrabschnittes (55) aufweist.

11. Verfahren zur Herstellung einer Dosierpumpe nach Anspruch 7 oder 8, dadurch gekennzeichnet, daß das Schließorgan (25/1) des ansaugseitigen Einwegventils (5/1) einstückig am zweiten Gehäuseteil (2/1, 2/2) angespritzt, nach dem Aufsetzen des Manschettenansatzes (28) des Faltenbalgs (3/1, 3/2) auf die Ringwand (19, 19/1) in Richtung des Faltenbalgs (3/1, 3/2) abgetrennt und unmittelbar in den Faltenbalg (3/1, 3/2) hineingeschoben wird, so daß es seine funktionsgerechte Position auf der Ventilsitzringfläche (21/1) des Faltenbalges (3/1, 3/2) einnimmt.

12. Verfahren nach Anspruch 11, dadurch gekennzeichnet, daß das Schließorgan (25/1) über dünne Verbindungsabschnitte (25/2) an der Ringwand (19) konzentrisch angespritzt sind.

13. Verfahren nach Anspruch 11 zur Herstellung einer Dosierpumpe nach Anspruch 10, dadurch gekennzeichnet, daß das Schließorgan (25/1) über dünne Verbindungsabschnitte (25/2) konzentrisch am Rohrabschnitt (55) angespritzt ist.

**Revendications**

1. Pompe de dosage pour la distribution de quantités dosées de matières liquides et/ou faiblement visqueuses, en particulier pâteuses, à partir de bouteilles, boîtes ou analogues, comprenant un soufflet (3) en matière plastique élastique disposé de manière étanche entre deux éléments de carter (1, 2) en matière plastique indéformable déplaçables coaxialement, de manière télescopique, l'un par rapport à l'autre dans le sens axial, et présentant aux deux extrémités du soufflet (3) des soupapes à passage direct (4, 5) lesquelles sont respectivement munies d'un organe de fermeture (25, 38) déplaçable dans le sens axial par rapport à une surface annulaire de siège de soupape (21, 40), le premier élément de carter (1) comportant un ajutage de distribution (8) et le second élément de carter (2) pouvant être emboîté sur le col d'une bouteille, boite ou analogue ou muni d'un récipient (49) conformé, caractérisée en ce que le soufflet (3, 3/1, 3/2) présente à son extrémité côté distribution une paroi frontale (33) conformée en une seule pièce, avec une ouverture de passage (36) et une surface annulaire de siège de soupape (40) pour l'organe de fermeture (38) chargé par ressort, et qu'il est appliqué de manière étanche, au moyen d'une surface de paroi annulaire (34/3, 35/3), contre une section de tube (10, 10/1, 10/2) laquelle est conformée en une seule pièce avec l'élément de carter (1, 1/1) muni de l'ajutage de distribution (8, 8/1) et s'appuie du côté frontal sur un épaulement annulaire (35/1) du soufflet (3, 3/1, 3/2).

2. Pompe de dosage selon la revendication 1, caractérisée en ce que la paroi frontale (33) du soufflet (3, 3/1, 3/2) est munie d'un collet de siège de soupape (34, 34/1) qui entoure l'ouverture de passage et dont la section terminale côté distribution forme la surface annulaire de siège de soupape (40) et dont la surface extérieure est appliquée de manière étanche contre la face intérieure de la section de tube (10).

3. Pompe de dosage selon la revendication 2, caractérisée en ce que la surface annulaire de siège de soupape (40) est constituée par une lèvre annulaire (34/2) du collet de siège de soupape (34/1), à faible épaisseur de paroi.

4. Pompe de dosage selon l'une des revendications 1, 2 ou 3, caractérisée en ce que le collet de siège de soupage (34) est appliqué de manière étanche, avec sa surface périphérique, contre la face intérieure de la section de tube (10).

5. Pompe de dosage selon la revendication 4, caractérisée en ce que la paroi frontale (33) du soufflet (3) comporte une nervure annulaire (35) qui enserre solidement la section de tube (10).

6. Pompe de dosage selon l'une des revendications 1, 2 ou 3, caractérisée en ce que le collet de siège de soupape (34/1) est entouré, à distance radiale, par une section de douille (35/2) conformée en une seule pièce sur la paroi frontale (33) du soufflet (3), laquelle dépasse du collet de siège de soupape (34/1) dans le sens axial et qui est emboîtée de manière étanche dans la section de tube (10/2) de l'élément de carter (1/1) muni de l'ajutage de distribution (8/1) ou entoure ladite section de tube (10/2) de manière étanche.

7. Pompe de dosage selon l'une des revendications 1 à 6, caractérisée en ce que le soufflet (3) comporte à son extrémité côté aspiration une manchette (28) laquelle entoure de manière étanche une paroi annulaire cylindrique (19) du second élément de carter (2), et une surface annulaire de siège de soupape (21/1) pour l'organe de fermeture (25/1) de la soupape de pompe (5/1) du côté aspiration, qui est située radialement à l'intérieur de la paroi annulaire (19).

8. Pompe de dosage selon la revendication 7, caractérisée en ce que l'organe de fermeture (25/1) de la soupape de pompe côté aspiration (5/1) présente la forme d'un plateau circulaire qui comporte sur les deux faces frontales des nervures radiales (53, 54) disposées en étoile.

9. Pompe de dosage selon l'une des revendications 1 à 8, caractérisée en ce que le second élément de carter (2/2) comporte, à l'intérieur de la paroi annulaire (19/1) entourée de manière étanche par la manchette (28) du soufflet (3/1) située du côté aspiration, une paroi annulaire (55) en forme de douille qui présente au moins une ouverture de passage (58, et forme avec la paroi annulaire (19/1) une chambre partielle (57) ouverte en direction du récipient (49) conformé.

10. Pompe de dosage selon la revendication 9, caractérisée en ce que la paroi annulaire présente la forme d'une section de tube cylindrique (55) disposée concentriquement par rapport à la paroi annulaire (19/1).

11. Procédé de fabrication d'une pompe de dosage selon l'une des revendications 7 ou 8, caractérisé en ce que l'organe de fermeture (25/1) de la soupape de pompe (5/1) située du côté aspiration est conformé en une seule pièce, par moulage par injection, sur le second élément de carter (2/1, 2/2), séparé après la mise en place de la manchette (28) du soufflet (3/1, 3/2) sur la paroi annulaire (19, 19/1) en direction du soufflet (3/1, 3/2) et engagé directement dans ledit soufflet (3/1, 3/2) de façon à prendre sa position fonctionnelle sur la surface annulaire de siège de soupape (21/1) du soufflet (3/1, 3/2).

12. Procédé selon la revendication 11, caractérisé en ce que l'organe de fermeture (25/1) est conformé, par moulage par injection, concentriquement sur la paroi annulaire (19) par l'intermédiaire de minces sections de raccordement (25/2).

13. Procédé selon la revendication 11 pour la fabrication d'une pompe de dosage selon la revendication 10, caractérisé en ce que l'organe de fermeture (25/1) est conformé, par moulage par injection, concentriquement sur la section de tube (55) par l'intermédiaire de minces sections de raccordement (25/2).

**Claims**

1. A proportioning pump for the delivery of metered amounts of liquid and/or low viscosity, particularly paste-like, materials from bottles, cans or the like with a bellows (3) of elastic plastic material sealingly mounted between two housing parts (1, 2) of dimensionally stable plastic material movable coaxially telescopically with respect to each other, in which pump one-way valves (4, 5) are mounted at both ends of the bellows (3), said valves (4, 5) having respectively a closure member (25, 38) axially movable relative to a valve seat ring surface (21, 40), the first housing part (1) being fitted with a delivery mouthpiece (8) and the second housing part (2) being able to be fitted on the neck of a bottle, can or the like, or being provided with a moulded-on container (49), characterized in that the bellows (3, 3/1, 3/2) has on its delivery end a front wall (33) integrally moulded on with a passage opening (36) and a valve seat ring surface (40) for the springloaded closure member (38), and applies sealingly by means of an annular wall surface (34/3, 35/3) on a pipe socket (10, 10/1, 10/2) which is moulded integrally on the housing part (1, 1/1) provided with the delivery mouth piece (1/1) and acts at the front upon an annular shoulder (35/1) of the bellows (3, 3/1, 3/2).

2. A proportioning pump according to claim 1, characterized in that the front wall (33) of the bellows (3, 3/1, 3/2) is provided with a valve seat collar (34, 34/1) the end portion of which on the delivery side forms the valve seat ring surface (40) and the outer surface of which applies sealingly on the inner surface of the pipe socket (10).

3. A proportioning pump according to claim 2, characterized in that the valve seat ring surface (40) is formed by a thin-walled annular lip (34/2) of the valve seat collar (34/1).

4. A proportioning pump according to claim 1, 2 or 3, characterized in that the valve seat collar (34) applies with its circumferential surface sealingly onto the inner surface of the pipe socket (10).

5. A proportioning pump according to claim 4, characterized in that the front wall (33) of the bellows (3) is provided with an annular rib (35) closely surrouding the pipe socket (10).

6. A proportioning pump according to claim 1, 2 or 3, characterized in that the valve seat collar (34/1) is surrounded at a radial distance by a bushing projection (35/2) moulded integrally on the front wall (33) of the bellows (3), which protrudes in axial direction over the valve seat collar (34/1), and protrudes sealingly into the pipe socket (10/2) of the housing part (1/1) fitted with the delivery mouthpiece (8/1) or surrounds sealingly said pipe socket (10/2).

7. A proportioning pump according to one of claims 1–6, characterized in that the bellows (3) is provided at its end on the suction side with a sleeve projection (28) sealingly surrounding a cylindrical annular wall (19) of the second housing part (2) and with a valve seat ring surface (21/1) situated radially inside the annular wall (19) for the closure member (25/1) of the pump valve (5/1) on the suction side.

8. A proportioning pump according to claim 7, characterized in that the closure member (25/1) on the suction side has the shape of a circular disc which is provided on both front sides with radial ribs (53, 54) arranged in cross or in star formation.

9. A proportioning pump according to one of claims 1 to 8, characterized in that the second housing part (2/2) has inside the annular wall (19/1) sealingly surrounded by the sleeve projection (28) of the bellows (3/1) on the suction side a bushing-like intermediate wall (55) provided with at least one passage opening (58) which forms together with the annular wall (19/1) a part chamber (57) opened towards the moulded on container (49).

10. A proportioning pump according to claim 9, characterized in that the intermediate wall has the shape of a pipe section (55), cylindrical and concentric with the annular wall (19/1).

11. A method of production of a proportioning pump according to claim 7 or 8, characterized in that the closure member (25/1) of the one-way valve (5/1) on the suction side is sprayed on integrally on the second housing part (2/1, 2/2), after the setting of the sleeve projection (28) of the bellows (3/1, 3/2) in the direction of the bellows (3/1, 3/2) is separated and is directly pushed into the bellows (3/1, 3/2) so that it assumes its proper operative position on the valve seat surface (21/1) of the bellows (3/1, 3/2).

12. A method according to claim 11, characterized in that the closure member (25/1) is concentrically sprayed over thin connection portions (25/2) on the annular wall (19).

13. A method according to claim 11 for the production of a proportioning pump according to claim 10, characterized in that the closure member (25/1) is sprayed over thin connection portions (25/2) concentrically on the pipe section (55).

FIG.1

FIG.3

EP 0 304 567 B1

FIG. 2

FIG. 4

FIG. 5

EP 0 304 567 B1